# FASCICULE DE BREVET EUROPEEN

(11) **EP 1 695 639 B1**
(45) Date de publication et mention de la délivrance du brevet: **09.05.2007**
(21) Numéro de dépôt: 05425093.1
(22) Date de dépôt: 23.02.2005
(51) Int. Cl.: A43B 5/04, B29D 31/515, B29D 31/518

(54) **Chaussure de sport multi-injectée de deux éléments distincts**
Mehrkomponentenspritzgegossener Sportschuh aus zwei unterschiedlichen Elementen
Multi-material injection moulded sports shoe, made of two distinct elements

(43) Date de publication de la demande: 30.08.2006
(73) Titulaire: LANGE INTERNATIONAL S.A., 1700 Fribourg (CH)
(72) Inventeur: Marmonier, Gilles, 38960 St-Etienne de Crossey (FR); Girolimetto, Giovanni, 31038 Paese (TV) (IT)
(74) Mandataire: Bugnion Genève

(56) Documents cités:
- EP-A- 0 823 323
- FR-A- 2 082 066
- FR-A- 2 734 690
- FR-A- 2 766 065
- US-A- 6 010 138

## Description

L'invention concerne tout ou partie de chaussure de sport, comme une coque ou un collier, comprenant au moins deux éléments distincts ou distinguables, au moins partiellement superposés, liés entre eux en quelques points ou sur une petite surface de sorte de conserver une mobilité relative l'un par rapport à l'autre. Elle concerne aussi un procédé de fabrication d'une telle partie de chaussure de sport.

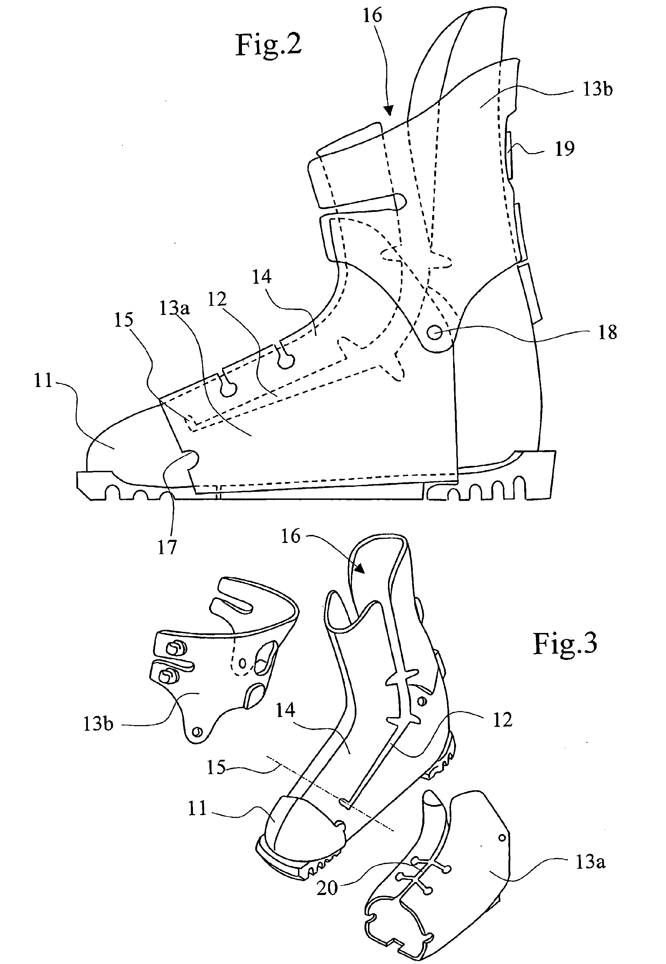

Un premier procédé de fabrication d'une chaussure de sport de l'art antérieur consiste à fabriquer séparément différents éléments plastiques par injection, puis à les assembler mécaniquement. Par exemple, la chaussure représentée sur la figure 2 peut être fabriquée selon ce procédé par l'assemblage d'une tige 13a et d'un collier 13b sur une coque 11. L'avantage de cette solution est de permettre à ces différents éléments indépendants de se déplacer les uns par rapport aux autres, pour remplir certaines fonctions techniques. Ainsi, sur l'exemple de la chaussure de ski de la figure 2, la coque 11 comprend deux ouvertures latérales 12 qui définissent une partie avant 14 de la chaussure, semblable à une languette. Cette construction permet l'agrandissement de l'ouverture 16 de la coque pour faciliter son chaussage et son déchaussage par rotation de cette languette 14 vers l'avant autour d'un axe transversal 15 placé vers la pointe de la coque. Sur cette coque se superposent les deux éléments 13a et 13b qui ont pour première fonction de recouvrir les ouvertures transversales 12 de la coque pour assurer l'étanchéité de la chaussure. La tige 13a est reliée mécaniquement à la coque au niveau de la semelle par emboîtement, comprend une ouverture 20 sur le dessus du cou de pied qui autorise ainsi la rotation de la languette 14 de la coque 11 vers l'avant, mentionnée précédemment. Des éléments de fermeture et serrage non représentés sont fixés de chaque côté de cette ouverture 20 pour entraîner la fermeture et le serrage de cette ouverture. Cette fermeture induit la fermeture et le serrage de la coque 11, le serrage entraînant une réduction des ouvertures 12, 20 respectivement de la coque 11 et de la tige 13a. Lors de la mise en oeuvre de cette seconde fonction de fermeture et serrage, les surfaces superposées en vis à vis de la tige 13a et de la coque 11 glissent l'une par rapport à l'autre, ce qui est possible grâce à la liaison mécanique entre ces éléments 11 et 13a décrite précédemment. De manière similaire, le collier 13b est fixé sur le haut de la coque 11 aux points 18 et 19 et garde une mobilité relative vis à vis de la coque pour remplir des fonctions similaires d'autorisation de l'ouverture de la languette 14 et de fermeture et serrage de la coque 11 par un lacet non représenté. L'inconvénient d'une telle chaussure provient de son procédé de fabrication qui est long et coûteux, puisqu'il nécessite un moule spécifique pour chaque élément de chaussure, un stockage des différents éléments fabriqués séparément puis une étape d'assemblage mécanique de ces éléments.

Un autre procédé de fabrication de chaussure de sport de l'art antérieur consiste à utiliser la technique de la bi-injection, qui consiste en la fabrication de la paroi de la chaussure par l'injection d'une première couche d'un premier matériau plastique puis en la surinjection, directement sur cette première couche toujours disposée sur la partie interne de son moule, d'une seconde couche dans le même matériau ou dans un matériau plastique dit "compatible" avec celui de la première couche, afin d'obtenir une soudure naturelle des deux matériaux plastiques au niveau de leurs surfaces superposées. Cette technique permet d'obtenir des chaussures dont la paroi possède des propriétés mécaniques et une esthétique variables en ses différents points grâce à la combinaison de deux matériaux qui peuvent avoir des propriétés mécaniques différentes, comme leur rigidité, ainsi que des aspects variés.

L'avantage de cette solution est de permettre une fabrication très rapide et peu coûteuse d'une chaussure. Toutefois, cette technique ne résout pas l'inconvénient des solutions précédentes et ne permet pas en elle-même de fabriquer simplement des chaussures composées de plusieurs éléments distincts superposés. Pour obtenir de telles chaussures, telles que celle décrite précédemment en référence aux figures 2 et 3, le procédé de fabrication nécessite toujours la fabrication séparée des différents éléments et leur assemblage mécanique.

Une chaussure moulée comprenant deux parties pivotantes est connue de FR-A-2082066.

Un premier objet de la présente invention consiste en une chaussure de sport de moindre coût comprenant plusieurs éléments distincts, au moins partiellement superposés.

Un second objet de la présente invention consiste en un procédé de fabrication simplifié pour obtenir une chaussure de sport comprenant plusieurs éléments distincts, au moins partiellement superposés.

Selon le concept de l'invention, les deux éléments distincts partiellement superposés de la chaussure de sport sont obtenus par le procédé de sur-injection du second élément sur le premier, dont le principe a été rappelé ci-dessus, mais en empêchant la soudure des deux éléments sur au moins une partie de leur surface superposée.

L'invention est plus précisément définie par les revendications.

Ces objets, caractéristiques et avantages de la présente invention seront exposés en détail dans la description suivante de modes d'exécution particuliers faits à titre non-limitatif en relation avec les figures jointes parmi lesquelles :
La figure 1 représente une vue en perspective d'une chaussure de ski selon un premier mode d'implémentation de l'invention ;
la figure 2 représente une vue de côté d'une chaussure de ski selon un second mode d'implémentation de l'invention ;
la figure 3 représente une vue éclatée des différents éléments distincts de la chaussure représentée à la figure 2.

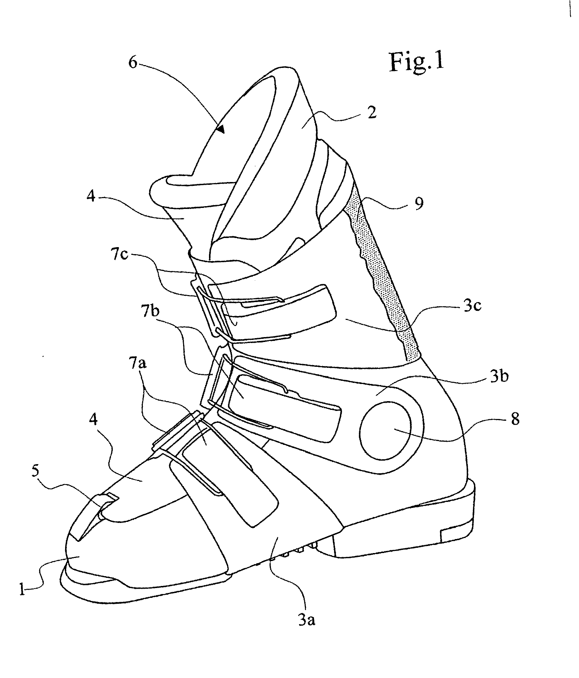

La chaussure de ski représentée sur la figure 1 comprend une coque 1 dans laquelle est inséré un chausson de confort 2, la coque 1 pouvant être fermée et serrée par trois éléments de fermeture et serrage 3a, 3b, 3c, respectivement positionnés au niveau de l'avant pied, du cou de pied et du bas de la jambe sur la coque 1. Cette coque 1 comprend une partie avant 4 qui recouvre une large échancrure qui s'étend depuis le haut de la coque jusqu'à un axe de liaison 5, positionné vers la pointe de la chaussure, cet axe 5 définissant un axe de rotation transversal qui permet la rotation vers l'avant de la partie avant 4 pour agrandir l'ouverture 6 de la chaussure et faciliter son chaussage et son déchaussage.

Chaque élément de fermeture et serrage 3a, 3b et 3c comprend deux rabats opposés liés à la coque 1 sur une de leurs extrémités et possédant des éléments d'accrochage respectivement 7a, 7b, 7c sur leur seconde extrémité libre, qui permettent l'accrochage et le rapprochement des deux rabats opposés de chaque élément 3a, 3b, 3c. Ces éléments remplissent ainsi une première fonction de fermeture et de serrage de la chaussure. Lors de la mise en oeuvre de cette fermeture et serrage, les deux rabats opposés se rapprochent en glissant sur la surface de la coque 1 tout en la compressant, induisant une diminution du volume global de la coque 1 par un rétrécissement de son échancrure recouverte par la partie avant 4. L'extrémité des rabats de l'élément 3a ne comprenant pas les éléments d'accrochage est repliée sous la coque 1 et fixée par une liaison mécanique. Les rabats de l'élément 3b sont liés à une partie latérale de la coque, proche du talon de la chaussure, par une liaison autour d'un axe 8 de la coque 1 qui leur autorise une rotation. Enfin, les rabats de l'élément 3c sont soudés à la coque 1 sur une petite surface 9 placée vers l'arrière de la coque. Ces éléments 3a, 3b, 3c remplissent une seconde fonction qui consiste à faciliter le chaussage et déchaussage de la chaussure lorsqu'ils ne sont pas accrochés. Pour cela, leur extrémité libre peut être écartée de la coque 1 par rotation autour de leurs points ou surface de liaison avec la coque, facilitant ainsi la rotation de la partie 4 de la coque pour agrandir l'ouverture 6 de la chaussure lors du chaussage et du déchaussage.

A titre d'exemple, le procédé de fabrication de la chaussure représentée en figure 1 repose sur les étapes suivantes :
- fabrication de la coque 1 par une première injection, avec un premier matériau plastique, dans un premier moule comprenant une forme interne et une ou plusieurs parties constituant le moule externe ;
- sur-injection des éléments 3a et 3b sur la coque obtenue à l'étape précédente toujours disposée sur la forme interne de son moule par une seconde injection d'un second matériau plastique non compatible avec le premier matériau pour éviter toute soudure entre les deux matériaux ;
- sur-injection de l'élément 3c sur la coque toujours disposée sur la forme interne de son moule avec un troisième matériau compatible avec le premier matériau, en ayant isolé auparavant la surface de la coque qui doit être recouverte par cet élément 3c à l'exception de la surface arrière 9, cette isolation étant réalisée par un support d'isolation ou un vernis ou une peinture d'isolation, dont la fonction technique est d'empêcher la soudure de ce troisième matériau de l'élément 3c sur la coque 1 dans cette zone 9.

Ainsi, le concept de l'invention consiste à utiliser le principe de fabrication de la multi-injection pour profiter de ses avantages de rapidité et de bas coût, mais en superposant des matériaux en évitant leur soudure, contrairement à l'art antérieur, pour fabriquer des chaussures avec plusieurs éléments distincts au moins partiellement superposés.

Il est donc possible d'éviter la soudure des deux matériaux surinjectés par les deux solutions suivantes :
- par exemple en superposant deux matériaux par nature incompatibles, comme le polyuréthane et le polyéthylène, comme cela a été illustré pour la fabrication des éléments 3a ou 3b précédents, ou
- en utilisant un moyen d'isolation placé sur une partie de la première couche injectée, et en surinjectant un second matériau plastique qui peut dans ce cas être compatible avec le premier matériau, le moyen d'isolation empêchant la soudure entre les deux matériaux. Ce moyen d'isolation peut être une peinture ou un vernis ou une feuille d'isolation comme une étiquette légèrement autocollante de papier sulfurisé qui est retirée en fin de procédé.

Enfin, les éléments distincts se caractérisent par le fait qu'ils disposent d'une relative mobilité l'un par rapport à l'autre, les rabats étant déplaçables par rapport à la coque, pour remplir une fonction de fermeture et serrage, de chaussage et déchaussage ou d'isolation par exemple, et par le fait qu'ils sont liés entre eux pour ne pas se séparer de manière accidentelle et non souhaitée. Leur liaison peut être réalisée par les deux solutions suivantes :
- une liaison mécanique, obtenue par une forme spécifique réalisée dans la première couche injectée pour former une partie male ou femelle, combinée avec une seconde forme complémentaire correspondante respectivement femelle ou male de la seconde couche injectée pour obtenir une imbrication inséparable des deux matériaux, comme cela a été illustré avec les deux éléments 3a et 3b précédents ; ou
- une liaison par soudure obtenue directement par la soudure de deux parties des surfaces superposées de deux matériaux compatibles lors de leur fabrication par bi-injection, comme cela a été illustré pour la fabrication de l'élément 3c précédent.
   Dans l'exemple décrit en référence avec la figure 1, les points ou surfaces de liaison des deux éléments superposés sont peu nombreux ou de petites dimensions, la majorité de leurs surfaces superposées étant distincte, séparée et apte à un mouvement relatif l'une par rapport à l'autre permettant le déplacement relatif des deux éléments. Ces éléments superposés restent parfaitement distinguables comme s'ils provenaient de l'assemblage de deux éléments totalement distincts, ce qui les différencie d'une paroi bi-injectée de l'art antérieur selon laquelle les matériaux superposés forment une paroi unique et continue, un tout indissociable.
   La figure 2 illustre une seconde chaussure de sport selon l'invention, qui est la réunion de trois éléments principaux 11, 13a et 13b, illustrés séparés sur la figure 3 et décrits dans la partie relative à l'art antérieur. Selon l'invention, cette chaussure est fabriquée selon les étapes suivantes
- injection d'un premier matériau plastique pour former la coque 11 dans un moule comprenant une forme interne et une ou plusieurs parties constituant le moule externe ;
- surinjection d'un second matériau plastique incompatible pour former les éléments 13a et 13b sur la coque 11 obtenue à l'étape précédente et toujours disposée sur la forme interne de son moule.

Le concept de l'invention peut bien sûr être mis en oeuvre pour tout ou partie, de type coque, collier, sangle ou bouclerie d'une chaussure de sport, et les différentes variantes décrites ci-dessus peuvent être combinées.

Finalement, la solution selon l'invention présente donc les avantages suivants :
- le procédé de fabrication présente l'avantage de la multi-injection et est simple et économique : les différents éléments sont superposés autour de la même forme interne d'un moule, ce qui évite la nécessité de plusieurs moules totalement distincts. Le résultat obtenu est directement la chaussure finie et il n'y a pas besoin d'étapes de stockage puis d'assemblage de plusieurs éléments ;
- le résultat obtenu est une chaussure composée de plusieurs éléments distincts superposés dont la combinaison offre de nombreux avantages intéressants par exemple pour le chaussage et le déchaussage facilité, la fermeture et le serrage et l'étanchéité de la chaussure de sport.

## Revendications

1. Procédé de fabrication d'une partie de chaussure de sport comprenant les étapes suivantes :
- injection d'un premier matériau plastique dans un moule pour former un premier élément (1, 11);
- surinjection d'un second matériau plastique sur le premier élément toujours disposé sur une partie de ce moule, pour former un second élément (3a, 3b, 3c ; 13a, 13b) distinct, au moins partiellement superposé audit premier élément, ayant au moins une partie de sa surface non liée par soudure à la surface en vis à vis du premier élément, ces deux surfaces en vis à vis non liées par soudure étant aptes à un mouvement relatif l'une par rapport à l'autre.

2. Procédé de fabrication d'une partie de chaussure de sport selon la revendication 1, **caractérisé en ce que** la seconde étape consiste à surinjecter un second matériau incompatible avec le premier matériau pour éviter d'obtenir la soudure entre les deux matériaux.

3. Procédé de fabrication d'une partie de chaussure de sport selon la revendication 2, **caractérisé en ce qu**'il comprend les étapes suivantes :
- formation d'une partie de liaison male ou femelle sur le premier élément (1,11);
- formation d'une partie de liaison correspondante femelle ou male sur le second élément (3a, 3b, 3c ; 13a, 13b) pour obtenir une liaison mécanique entre les deux éléments.

4. Procédé de fabrication d'une partie de chaussure de sport selon la revendication 1, **caractérisé en ce qu**'il comprend une étape intermédiaire consistant à disposer un moyen d'isolation sur une partie de la surface du premier élément (1, 11) avant de surinjecter un second matériau pour éviter la fusion entre les deux matériaux sur cette partie de surface.

5. Procédé de fabrication d'une partie de chaussure de sport selon la revendication 4, **caractérisé en ce que** le second matériau est un matériau compatible avec le premier matériau et **en ce que** le moyen d'isolation n'occupe pas toute la surface du premier élément de sorte qu'une partie de la surface du second élément est directement surinjectée sur la surface du premier élément pour obtenir une liaison par soudure des deux matériaux.

6. Procédé de fabrication selon l'une des revendications précédentes, **caractérisé en ce que** le premier élément formé est une coque et le second élément un ou plusieurs rabats d'accrochage ou une tige ou un collier.

7. Partie de chaussure de sport comprenant deux éléments distincts au moins partiellement superposés et ayant une première partie de leur surface en vis à vis déplaçable l'une par rapport à l'autre, **caractérisée en ce que** les deux éléments sont liés entre eux par une soudure sur une seconde partie de leur surface en vis à vis, obtenue par la surinjection du second élément sur le premier.

## Claims

1. Method for manufacturing a sports boot part, comprising the following steps:
- injecting a first plastic into a mould so as to form a first element (1, 11);
- injection overmoulding a second plastic onto the first element still placed on a part of this mould, so as to form a separate second element (3a, 3b, 3c; 13a, 13b) which is at least partially superimposed on the said first element and has at least a part of its surface not joined by welding to the facing surface of the first element, these two facing surfaces not joined by welding being capable of relative movement with respect to each other.

2. Method for manufacturing a sports boot part according to Claim 1, **characterized in that** the second step consists in injection overmoulding a second plastic which is incompatible with the first plastic so as to avoid causing welding between the two plastics.

3. Method for manufacturing a sports boot part according to Claim 2, **characterized in that** it comprises the following steps:
- forming a male or female joining part on the first element (1, 11);
- forming a corresponding female or male joining part on the second element (3a, 3b, 3c; 13a, 13b) so as to obtain a mechanical connection between the two elements.

4. Method for manufacturing a sports boot part according to Claim 1, **characterized in that** it comprises an intermediate step consisting in placing an isolating means on a part of the surface of the first element (1, 11) before injection overmoulding a second plastic, in order to prevent fusion of the two plastics on this surface part.

5. Method for manufacturing a sports boot part according to Claim 4, **characterized in that** the second plastic is a plastic compatible with the first plastic and **in that** the isolating means does not occupy the entire surface of the first element so that a part of the surface of the second element is injection overmoulded directly onto the surface of the first element so as to join together, by welding, the two plastics.

6. Manufacturing method according to one of the preceding claims, **characterized in that** the first element formed is a shell and the second element is one or more fastening flaps or an upper or a leg-piece.

7. Sports boot part comprising two separate elements at least partially superimposed and having a first part of their facing surfaces able to move with respect to each other, **characterized in that** the two elements are joined together by a weld on a second part of their facing surfaces, obtained by injection overmoulding the second element onto the first element.

## Patentansprüche

1. Verfahren zur Herstellung eines Teils eines Sportschuhs mit folgenden Schritten:
- Spritzen eines ersten Kunststoffmaterials in eine Form zur Bildung eines ersten Elements (1, 11):
- Überspritzen des noch immer auf einem Teil dieser Form angeordneten ersten Elements mit einem zweiten Kunststoffmaterial zur Bildung eines zweiten unterschiedlichen Elements (3a, 3b, 3c; 13a, 13b), das wenigstens teilweise dem ersten Element überlagert wird und von welchem wenigstens ein Teil seine Oberfläche mit der gegenüberliegenden Oberfläche des ersten Elements nicht durch eine Schweissverbindung verbunden ist, wobei diese beiden nicht durch Verschweissen verbundenen gegenüberliegenden Oberflächen relativ zueinander beweglich sind.

2. Verfahren nach Anspruch 1, **dadurch gekennzeichnet, dass** der zweite Schritt darin besteht, dass das Überspritzen mit einem zweiten Material erfolgt, welches mit dem ersten Material inkompatibel ist, um zu verhindern, dass die Schweissverbindung zwischen den beiden Materialien entsteht.

3. Verfahren nach Anspruch 2, **dadurch gekennzeichnet, dass** es die folgenden Schritte umfasst:
- Bildung eines ersten vorstehenden oder vertieften Verbindungsteils auf dem ersten Element (1. 11);
- Bildung eines entsprechenden vertieften oder vorstehenden Verbindungsteils auf dem zweiten Element (3a, 3b, 3c; 13a, 13b), um eine mechanische Verbindung zwischen den beiden Elementen zu erhalten.

4. Verfahren nach Anspruch 1, **dadurch gekennzeichnet, dass** es einen Zwischenschritt umfasst, der darin besteht, dass auf einem Teil der Oberfläche des ersten Elements (1, 11), bevor es mit einem zweiten Material überspritzt wird, ein Isolationsmittel angeordnet wird, um das Verschmelzen beider Materialien auf diesem Teil der Oberfläche zu verhindern.

5. Verfahren nach Anspruch 4, **dadurch gekennzeichnet, dass** das zweite Material ein mit dem ersten Material kompatibles Material ist und dass die Isolation nicht die gesamte Oberfläche des ersten Elements einnimmt, so dass die Oberfläche des ersten Element direkt mit einem Teil der Oberfläche des zweiten Elements überspritzt wird, um eine Schweissverbindung der beiden Materialien zu erhalten.

6. Verfahren nach einem der vorangehenden Ansprüche, **dadurch gekennzeichnet, dass** das erste gebildete Element eine Schale ist und das zweite Element aus einer oder mehreren zum Festhaken dienenden Klappen oder einem Schaft oder einer Manschette besteht.

7. Teil eines Sportschuhs mit wenigstens zwei verschiedenen überlagerten Elementen, bei denen ein erster Teil ihrer gegenüberliegenden Oberfläche relativ zueinander verschiebbar ist, **dadurch gekennzeichnet, dass** die beiden Elemente auf einem zweiten Teil ihrer gegenüberliegenden Oberfläche durch eine Schweissverbindung miteinander verbunden sind, welche durch Überspritzen des ersten Elements mit dem zweiten Element erhalten wurde.
